# EUROPÄISCHE PATENTSCHRIFT

(11) **EP 0 760 202 B1**
(45) Veröffentlichungstag und Bekanntmachung des Hinweises auf die Patenterteilung: **17.11.1999**
(21) Anmeldenummer: 96111278.6
(22) Anmeldetag: 12.07.1996
(51) Int. Cl.: A01F 29/12, A01D 43/06, B65G 67/22

(54) **Vorrichtung zum Befüllen von Ladebehältern**
Device for filling loading boxes
Dispositif pour remplir des récipients de chargements

(30) Priorität: 29.08.1995 DE 19531662
(43) Veröffentlichungstag der Anmeldung: 05.03.1997
(73) Patentinhaber: CLAAS KGaA, 33428 Harsewinkel (DE)
(72) Erfinder: Pollklas, Manfred, 33378 Rheda-Wiedenbrück (DE)

(56) Entgegenhaltungen:
- US-A- 3 889 796
- US-A- 4 376 609

## Beschreibung

Die Erfindung bezieht sich auf eine Vorrichtung zur automatischen Befüllung von einem insbesondere fahrenden Ladebehälter mit einem Gutstrom, insbesondere an einer benachbart fahrenden Erntemaschine wie Feldhäcksler oder Mähdrescher.

Eine gattungsgemäße Vorrichtung ist in der Schrift DE 44 03 893 beschrieben. Die Erntemaschinen nehmen während des Erntevorganges kontinuierlich Erntegut auf, bearbeiten es in bekannter und geeigneter Weise, beispielsweise durch Dreschen und Trennen von Körnern in einem Mähdrescher oder durch Häckseln in einem Feldhäcksler, und geben das Erntegut zur weiteren Bearbeitung und Verwendung entweder kontinuierlich oder nach Zwischenspeicherung an einen Ladebehälter ab, mit dem es dann abtransportiert wird. Bei einem kontinuierlich abzugebendem Gutstrom ist es sehr anstrengend für den Fahrer der Erntemaschine, gleichzeitig sowohl den vor der Erntemaschine liegenden Feldbereich als auch die seitliche Abgabe des Ernteguts in den Ladebehälter zu überwachen. Eine ständige Überwachung der Abgabe des Erntegutes ist erforderlich, weil sich die Erntemaschine und der parallel fahrende Ladebehälter während der Vorfahrt sowohl in der Längs-als auch in der Querrichtung dauernd relativ zueinander bewegen und die Abgabe des Erntegutes dieser relativen Bewegung angepaßt werden muß. Auch bei nur zeitweiser Abgabe von Erntegut an einen seitlichen Ladebehälter muß sich der Fahrer gleichzeitig auf die Vorfahrt und die Abgabe des Erntegutes konzentrieren, was zu Fehlbedienungen führen kann. Eine automatisch und zuverlässig funktionierende Steuerung des Auswurfkrümmers/Abgaberohres/Übergabebandes bedeutet so eine erheliche Bedienungserleichterung für den Fahrer einer Erntemaschine.

Eine bekannte Vorrichtung zur automatischen Befüllung von Ladebehältern fünktioniert auf die folgende Weise: durch zumindest einen oberhalb des Ladebehälters angebrachten optischen und/oder akustischen Sensor wird der Ladebehälter vermessen und die Füllstandshöhe des Füllgutes ermittelt, indem die von dem Entfernungsmesser erzeugten Entfernungssignale einer elektronischen Auswerte- und Steuereinrichtung zugeführt sind, welche laufend eine Verschwenkstellung des Auswurfkrümmers und/oder eine Verschwenkstellung der Auswurfklappe steuert, und dabei möglichst verlustfrei eine möglichst vollständige Befüllung des Ladebehälters geregelt erzielt.

Im praktischen Einsatz dieser Vorrichtung hat sich gezeigt, daß insbesondere Staub und langes Gras das Sensorsignal des oder der Entfernungsmesser stört und deshalb in nicht allen Einsatzbedingungen eine vollkommen fehlerfreie Ermittlung der korrekten Entfernungssignale, aus denen die elektronische Auswerte- und Steuereinrichtung die Verschwenkstellung zur möglichst verlustfreien und vollständigen Befüllung des Ladebehälters errechnet, möglich ist. Aufgrund der hohen Förderleistung von Feldhäckslern und Mähdreschern bei der Abgabe von Erntegut können erhebliche Einbußen entstehen, wenn eine automatische Befüllvorrichtung fehlerhaft arbeitet. Eine Verstärkung des Sensorimpulses kann die auftretenden Fehler nicht vermeiden, da das Sensorsignal von den umherwirbelnden Staubpartikeln und langen Grashalmen reflektiert wird und bei zunehmend stärkerem Sensorimpuls der eigentlich falsche Entfernungsmeßwert bestätigt wird.

Es ist Aufgabe der vorliegenden Erfindung, eine Vorrichtung zur automatischen Befüllung eines Ladebehälters so auszugestalten, daß eine einwandfreie Funktion auch in schwierigen Einsatzbedingungen gegeben ist.

Die erfindungsgemäße Aufgabe wird gelöst durch zumindest einen zusätzlichen optischen und/oder akustischen Entfernungsmesser, der an dem Auswurfkrümmer angebracht ist und den seitlichen Abstand zwischen der Erntemaschine und dem Ladebehälter mißt und die gemessenen Abstandswerte der elektronischen Auswerte- und Steuereinrichtung zuführt. Da in dem Raum zwischen der Erntemaschine und dem Ladebehälter in der Regel weder Staub noch umherfliegende Grashalme die Sensorsignale stört, werden so zuverlässig Meßwerte gemessen, die unter allen Erntebedingungen zur Verfügung stehen.

In weiterer Ausgestaltung der Erfindung werden die von dem oder den zusätzlichen optischen und/oder akustischen Entfernungsmessern ermittelten Abstandsmeßwerte nur dann von der elektronischen Auswerte- und Steuereinrichtung zur Ermittlung von Stellwerten für die Verschwenkstellung des Auswurfkrümmers verwendet, wenn die bekannten am Auswurfkrümmer befestigten Entfernungsmesser der Auswerte- und Steuereinrichtung als gestört erkannte Entfernungssignale zuführen. Um die Auswerte- und Steuereinrichtung von unnötigen Auswerte- und Steuervorgängen zu entlasten, ist es vorteilhaft, der Auswerte- und Steuereinrichtung nur dann Entfernungssignale von den zusätzlichen optischen und/oder akustischen Entfernungsmessern zuzuführen, wenn die Differenz des gemessenen Entfernungswertes zu einem früher gemessenen Entfernungswert einen definierten Grenzwert überschreitet.

In weiterer Ausgestaltung der Erfindung verfügt zumindest einer der zusätzlichen optischen und/oder akustischen Entfernungsmesser über eine Scannfunktion, anhand welcher die relative Bewegung des Ladebehälters zur Erntemaschine in Vorfahrtrichtung ermittelt und der Wert der gemessenen relativen Bewegung der Auswerte- und Steuereinrichtung zugeführt ist. Die zusätzlichen optischen und/oder akustischen Entfernungsmesser können anstelle am Auswurfkrümmer auch an oder oberhalb der Seitenflächen der Erntemaschine angebracht sein.

Weiter wird vorgeschlagen, den oder die oberhalb des Ladebehälters angebrachten optischen und/oder akustischen Entfernungsmesser zur Bestimmung der Füllhöhe und den oder die zusätzlichen optischen und/oder akustischen Entfernungsmesser zur Bestimmung der Wurfweite des Auswurfkrümmers zu nutzen. Bei der Auswertung der Entfernungssignale von den Entfernungsmessern kann die Auswerte- und Steuerungsvorrichtung von einer standardisierten Breite der Ladebehälter, beispielsweise einer Breite von 2,50 m, ausgehen. Anstelle der standardisierten Breite der Ladebehälter kann auch eine Eingabeeinrichtung vorgegeben werden, mittels derer die jeweilige Breite eines zu befüllenden Ladebehälters in die Auswerte-und Steuereinrichtung eingegeben werden kann. Außerdem ist es vorteilhaft, wenn der Normal-Sollwert des von der Auswerte- und Steuereinheit ermittelten Soll-Auftreffpunktes des Gutstromes im zu befüllenden Ladebehälter durch manuell eingegebene oder von Sensoren zugeführte Signale veränderbar ist. Dadurch ist es möglich, auch unter besonderen Betriebsbedingungen wie beispielsweise bei Arbeiten am Hang oder bei starkem Wind eine sichere Befüllung des Ladebehälters zu gewährleisten. Durch Neigungs- oder Windmeßsensoren können Signalwerte ermittelt werden, die der Auswerte- und Steuereinheit zugeführt und von dieser in ein den besonderen Betriebsbedingungen angepaßten Sollwert für den Soll-Auftreffpunkt umgerechnet wird, der wiederum zur Steuerung der Überladeeinrichtung genutzt wird.

Anstelle eines Auswurfkrümmers eines Feldhäckslers können mit der erfindungsgemäßen Vorrichtung auch andere Überladeeinrichtungen einer Erntemaschine, wie insbesondere das Korntank-Auslaufrohr eines Mähdreschers oder das Übergabeband eines Kartoffelernters oder eines Zuckerrübenroders gesteuert werden.

In den Zeichnungen sind weitere vorteilhafte Ausführungen dargestellt, die näher erläutert werden. Es zeigen:
- Fig.1: eine Ansicht von hinten von einem Feldhäcksler, der parallel zu einem Ladebehälter fährt und einen Gutstrom in den Ladebehälter fördert,
- Fig.2: eine schematische Darstellung eines erfindungsgemäß bestückten Auswurfkrümmers samt Anschlüssen an eine Auswerte- und Steuereinheit und die zugehörigen Aktoren,
- Fig.3: eine Draufsicht auf eine Erntemaschine und einen seitlich fahrenden Ladebehälter.

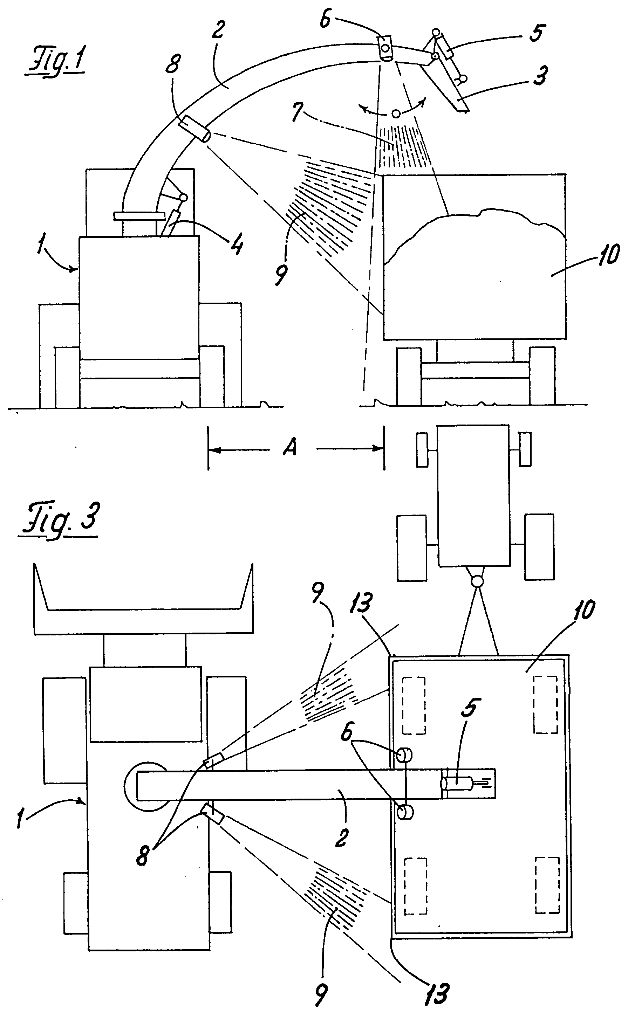

Figur 1 zeigt einen Feldhäcksler (1) in der Ansicht von hinten, der mit einem um die vertikale Achse drehbaren und in der Höhe mittels des Hubzylinders (4) verstellbaren Auswurfkrümmer (2) ausgestattet ist. Am Auswurfende des Auswurfkrümmers (2) befindet sich eine Auswurfklappe (3), die ebenfalls mittels eines Antriebes (5) verstellbar ist. Am Auswurfkrümmer des Feldhäckslers bzw. der Erntemaschine (1) st ein optischer und/oder akustischer Entfernungsmesser (6) befestigt, der während einer Verschwenkbewegung mit seinen optischen und/oder akustischen Emissionen (7) den unter der Auswurfklappe (3) liegenden Raum überstreicht und gleichzeitig in an sich bekannter Weise die zurückgeworfenen Echosignale mißt und in von einer Auswerte- und Steuereinheit weiterverarbeitbare Entfernungssignale umsetzt. Zusätzlich zu dem am Auswurfkrümmer (2) befestigten Entfernungsmesser (6) ist am Auswurfkrümmer (2) ein weiterer optischer und/oder akustischer Entfernungsmesser (8) angebracht, dessen optische und/oder akustische Emissionen (9) seitlich auf einen neben der Erntemaschine (1) befindlichen Ladebehälter (10) gerichtet sind. Auch der Entfernungsmesser (8) mißt die zurückgeworfenen Echosignale und ermittelt daraus in an sich bekannter Weise von der Auswerte- und Steuereinheit weiterverarbeitbare Entfernungssignale. Die Auswerte- und Steuereinheit bekommt also zumindest zwei Entfernungssignale: die von dem Entfernungsmesser (6), aus dessen Entfernungssignalen in an sich bekannter Weise Füllstand und relative Position der Seitenwände des Ladebehälters (10) ermittelt werden, und zusätzlich die Entfernungssignale des Entfernungsmessers (8), die den seitlichen Abstand (A) zwischen Erntemaschine (1) und dem Ladebehälter (10) darstellen oder aus denen dieser ableitbar ist.

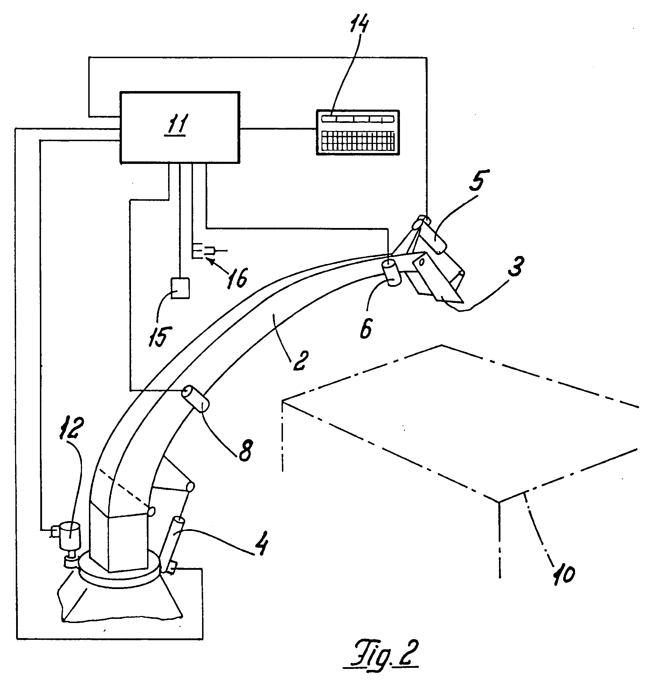

Figur 2 zeigt den Anschluß der Entfernungsmesser (6) und (8) an die Auswerte-und Steuereinheit (11), die aus einem Mikroprozessor besteht. Durch geeignete Auswerte- und Steuerungssoftware werden von der Auswerte- und Steuereinheit (11) Stellbefehle ermittelt, die an die Aktoren (4), (5) und (12) zur Ausführung der Stellbefehle übermittelt werden. Im gezeigten Beispiel ist der Aktor (12) für die Drehung des Auswurfkrümmers (2) um die vertikale Achse vorgesehen. Über die Eingabevorrichtung (14) können vom Bediener zusätzliche Vorgaben oder Korrekturen zur Berechnung der Stellwerte für die Auswerte- und Steuereinheit (11) eingegeben werden. Gleichzeitig können an die Auswerte- und Steuereinheit Sensoren (15) angeschlossen sein, die für die Steuerung wichtige Daten wie beispielsweise Windstärke und -richtung und/oder Schräglage der Erntemaschine (1) liefern. Außerdem verfügt die Auswerte- und Steuereinrichtung (11) über eine Schnittstelle (16) zur übrigen Elektronik der Erntemaschine (1), über die beispielsweise Werte über die Durchsatzmenge, Feuchtigkeit, das Gewicht des geerneteten Gutes oder andere Daten ausgetauscht werden. So ist es auch denkbar, über die Schnittstelle (16) eine CAN-Bus-Kommunikation auch mit den Bedienelementen durchzuführen.

Figur 3 zeigt, daß mittels eines oder zweier Entfernungsmesser (8) die Länge eines Ladebehälters (10) sowie dessen relative Position zur Erntemaschine (1) ermittelt werden kann. Die Entfernungsmesser (8) emittieren ein definiertes Scannsignal (9), aus dessen Echo die Entfernung zu den seitlichen Enden (13) des Ladebehälters (10) ermittelt und der Auswerte- und Steuereinheit (11) zugeführt werden. Mittels geeigneter Softwareprogramme kann die Auswerte- und Steuereinheit (11) aus der Lage der seitlichen Enden (13) relativ zur Erntemaschine (1) den aktuellen Auftreffpunkt des Gutstroms im Ladebehälter (10) ermitteln und bei relativer Bewegung der Erntemaschine (1) zum Ladebehälter die Stellung des Auswurfkrümmers (2) korrigieren. Mittels einer an die Auswerte- und Steuereinrichtung (11) angeschlossenen Eingabeeinrichtung (14) können der Auswerte- und Steuervorrichtung (11) Soll- oder Korrekturwerte zugeführt werden. Die Soll- oder Korrekturwerte können sich beispielsweise beziehen auf die Länge oder Breite des Ladebehälters (10), die mögliche Füllhöhe des Ladebehälters, eine Vorgabe oder Veränderung des gewünschten Auftreffpunktes des Gutstromes auf den Ladebehälter oder sonstige Funktionsparameter der Auswerte- und Steuereinrichtung (11).

## Patentansprüche

1. Vorrichtung zur automatischen Befüllung von einem fahrenden Ladebehälter (10) mit einem Gutstrom, an einer benachbart fahrenden Erntemaschine (1), welche einen um eine vertikale und/oder horizontale Achse gesteuert schwenkbaren Auswurfkrümmer (2), gegebenenfalls mit einer endseitigen, schwenkbaren Auswurfklappe (3) für den Transport des Gutstromes wie Silage, Körner oder dergleichen, von der Erntemaschine zum Ladebehälter aufweist, an der zumindest ein an dem Auswurfkrümmer der Erntemaschine oberhalb des Ladebehälters angebrachter optischer und /oder akustischer Entfernungsmesser (6) befestigt ist, wobei die vom Entfernungsmesser erzeugten Entfernungssignale einer elektronischen Auswerte- und Steuereinrichtung (11) zugeführt sind, welche die Verschwenkstellung des Auswurfkrümmers steuert,
**dadurch gekennzeichnet, daß**
zumindest ein zusätzlicher optischer und/oder akustischer Entfernungsmesser (8), der an dem Auswurfkrümmer (2) den seitlichen Abstand zwischen der Erntemaschine (1) und dem Ladebehälter (10) mißt und die gemessenen Abstandswerte der elektronischen Auswerte- und Steuereinrichtung (11) zugeführt sind.

2. Vorrichtung nach Anspruch 1,
**dadurch gekennzeichnet, daß**
die Abstandsmeßwerte des oder der zusätzlichen optischen und/oder akustischen Entfernungsmesser nur dann von der elektronischen Auswerte- und Steuereinrichtung zur Ermittlung von Stellwerten für die Verschwenkstellung des Auswurfkrümmers verwendet werden, wenn die bekannten am Auswurfkrümmer befestigten Entfernungsmesser der Auswerte- und Steuereinrichtung als gestört erkannte Entfernungssignale zuführen.

3. Vorrichtung nach Anspruch 1 oder 2,
**dadurch gekennzeichnet, daß**
der oder die zusätzlichen optischen und/oder akustischen Entfernungsmesser nur dann ein Entfernungssignal an die Auswerte- und Steuereinrichtung zuführen, wenn die Differenz des gemessenen Entfernungswertes zu einem früher gemessenen Entfernungswert einen definierten Grenzwert überschreitet.

4. Vorrichtung nach einem der Ansprüche 1 bis 3,
**dadurch gekennzeichnet, daß**
zumindest einer der zusätzlichen optischen und/oder akustischen Entfernungsmesser über eine Scannfunktion verfügt, anhand welcher die relative Bewegung des Ladebehälters zur Erntemaschine in Vorfahrtsrichtung ermittelt und der Wert der gemessenen relativen Bewegung der Auswerte- und Steuereinrichtung zugeführt ist.

5. Vorrichtung nach einem der Ansprüche 1 bis 4,
**dadurch gekennzeichnet, daß**
die zusätzlichen optischen und/oder akustischen Entfernungsmesser an oder oberhalb der Seitenflächen der Erntemaschine befestigt sind.

6. Vorrichtung nach einem der Ansprüche 1 bis 5,
**dadurch gekennzeichnet, daß**
der/die oberhalb des Ladebehälters angebrachten optischen und/oder akustischen Entfernungsmesser zur Bestimmung der Füllhöhe und der/die zusätzlichen optischen und/oder akustischen Entfernungsmesser zur Bestimmung der Wurfweite des Auswurfkrümmers genutzt werden.

7. Vorrichtung nach Anspruch 6,
**dadurch gekennzeichnet, daß**
die Auswerte- und Steuereinrichtung zur Steuerung des Auswurfkrümmers grundsätzlich von einer bestimmten Breite des Ladebehälters ausgeht.

8. Vorrichtung nach Anspruch 6 oder 7,
**dadurch gekennzeichnet, daß**
die Breite des zu befüllenden Ladebehälters über eine Eingabeeinrichtung der Auswerte- und Steuereinrichtung vorgegeben werden kann.

9. Vorrichtung nach einem der Ansprüche 1 bis 8,
**dadurch gekennzeichnet, daß**
der Normal-Sollwert des von der Auswerte- und Steuereinrichtung ermittelten Soll-Autreffpunktes des Gutstromes im zu befüllenden Ladebehälter durch manuell eingegebene oder von Sensoren zugeführte Signale veränderbar ist.

10. Vorrichtung nach einem der Ansprüche 1 bis 9,
**dadurch gekennzeichnet, daß**
anstelle des Auswurfkrümmers eine sonstige Überladeeinrichtung, insbesondere ein Auslaufrohr eines Mähdreschers, das Übergabeband eines Kartoffelernters oder eines Zuckerrübenroders mit der Vorrichtung gesteuert wird.

11. Vorrichtung nach einem der Ansprüche 1 bis 10,
**dadurch gekennzeichnet, daß**
der oder die vorbekannten Entfernungsmesser fehlen und nur der oder die zusätzlichen Entfernungsmesser den seitlichen Abstand zwischen der Erntemaschine und dem Ladebehälter messen, die Auswerte- und Steuereinrichtung von einer an sich bekannten Vorrichtung zur Durchflußmengenmessung Durchflußmengendaten erhält und zur Steuerung der Übergabeeinrichtung auswertet.

## Claims

1. Apparatus for automatically filling a moving loading container (10) with a stream of material, at a harvester (1) which is moving in adjacent relationship and which has a curved discharge member (2) controlledly pivotable about a vertical and/or a horizontal axis, possibly with a pivotable discharge flap (3) at its end, for transportation of the stream of material such as silage, grain or the like from the harvester to the loading container, to which there is fixed at least one optical and/or acoustic distance measuring device (6) which is mounted to the curved discharge member of the harvester above the loading container, wherein the distance signals produced by the distance measuring device are fed to an electronic evaluation and control device (11) which controls the pivotal position of the curved discharge member, characterised in that at least one additional optical and/or acoustic distance measuring device (8) which is mounted to the curved discharge member (2) measures the lateral spacing between the harvester (1) and the loading container (10) and the measured spacing values are fed to the electronic evaluation and control device (11).

2. Apparatus according to claim 1 characterised in that the spacing measurement values of the additional optical and/or acoustic distance measuring device or devices are used by the electronic evaluation and control device for ascertaining control values for the pivotal position of the curved discharge member only when the known distance measuring devices which are secured to the curved discharge member feed the evaluation and control device with distance signals which are recognised as defective.

3. Apparatus according to claim 1 or claim 2 characterised in that the additional optical and/or acoustic distance measuring device or devices feed a distance signal to the evaluation and control device only when the difference of the measured distance value relative to an earlier measured distance value exceeds a defined limit value.

4. Apparatus according to one of claims 1 to 3 characterised in that at least one of the additional optical and/or acoustic distance measuring devices has a scanning function, by means of which the relative movement of the loading container relative to the harvester in the direction of forward travel is detected and the value of the measured relative movement is fed to the evaluation and control device.

5. Apparatus according to one of claims 1 to 4 characterised in that the additional optical and/or acoustic distance measuring devices are secured on or above the side surfaces of the harvester.

6. Apparatus according to one of claims 1 to 5 characterised in that the optical and/or acoustic distance measuring device or devices mounted above the loading container is or are used for determining the filling level and the additional optical and/or acoustic distance measuring device or devices is or are used for determining the projection range of the curved discharge member.

7. Apparatus according to claim 6 characterised in that the evaluation and control device for controlling the curved discharge member is based in principle on a given width of the loading container.

8. Apparatus according to claim 6 or claim 7 characterised in that the width of the loading container to be filled can be predetermined for the evaluation and control device by way of an input device.

9. Apparatus according to one of claims 1 to 8 characterised in that the normal reference value of the reference point of impingement of the stream of material in the loading container to be filled, said point of impingement being ascertained by the evaluation and control device, is variable by signals which are input manually or which are supplied by sensors.

10. Apparatus according to one of claims 1 to 9 characterised in that instead of the curved discharge member any other transloading device, in particular a discharge pipe of a combine harvester, the transfer belt of a potato harvester or a sugar beet digger is controlled with the apparatus.

11. Apparatus according to one of claims 1 to 10 characterised in that the previously known distance measuring device or devices are omitted and only the additional distance measuring device or devices measures or measure the lateral spacing between the harvester and the loading container, and the evaluation and control device receives through-flow quantitative data from a per se known through-flow quantitative measurement device and evaluates said data for control of the transfer device.

## Revendications

1. Dispositif de remplissage automatique d'un conteneur (10) en mouvement avec un flux de produit, sur une machine de récolte (1) se déplaçant à côté du conteneur, comprenant un coude éjecteur (2) pivotant de manière contrôlée autour d'un axe vertical et/ou d'un axe horizontal, éventuellement avec un volet d'éjecteur (3) pivotant placé à son extrémité, pour le transport du flux de produit, tel que du produit d'ensilage, du grain ou similaire, de la machine de récolte vers le conteneur, et au moins un télémètre (6) optique et/ou acoustique fixé sur le coude éjecteur de la machine de récolte, au dessus du conteneur, les signaux de distance délivrés par le télémètre étant transmis à un dispositif électronique de traitement et de commande (11) qui commande la position de pivotement du coude éjecteur, caractérisé par le fait qu'il est prévu au moins un télémètre (8) optique et/ou acoustique supplémentaire sur le coude éjecteur (2) de la machine de récolte (1), qui mesure la distance entre la machine de récolte (1) et le conteneur (10) et que les valeurs de distance mesurées sont transmises au dispositif électronique de traitement et de commande (11).

2. Dispositif selon revendication 1, caractérisé par le fait que les valeurs de distance mesurées du ou des télémètre(s) (8) optique(s) et/ou acoustique(s) supplémentaire(s) ne sont utilisés par le dispositif électronique de traitement et de commande, pour déterminer des valeurs de réglage pour le pivotement du coude éjecteur que lorsque les télémètres connus fixés sur le coude éjecteur fournissent des signaux de distance reconnus erronés au dispositif de traitement et de commande.

3. Dispositif selon la revendication 1 ou 2, caractérisé par le fait que le ou les télémètre(s) (8) optique(s) et/ou acoustique(s) supplémentaire(s) ne délivre(nt) un signal de distance au dispositif de traitement et de commande que lorsque la différence entre la valeur de distance mesurée et une valeur de distance mesurée précédemment dépasse une valeur limite définie.

4. Dispositif selon une des revendications 1 à 3, caractérisé par le fait qu'au moins un des télémètres (8) optiques et/ou acoustiques supplémentaires dispose d'une fonction de balayage à l'aide de laquelle le déplacement relatif du conteneur par rapport à la machine de récolte dans la direction de progression et la valeur mesurée du déplacement relatif est transmise au dispositif de traitement et de commande.

5. Dispositif selon une des revendications 1 à 4, caractérisé par le fait que les télémètres optiques et/ou acoustiques supplémentaires sont fixés sur les surfaces latérales de la machine de récolte ou au dessus de celles-ci.

6. Dispositif selon une des revendications 1 à 5, caractérisé par le fait que le ou les télémètre(s) optique(s) et/ou acoustique(s) disposé(s) au dessus du conteneur est/sont utilisé(s) pour déterminer le niveau de remplissage et le ou les télémètre(s) optique(s) et/ou acoustique(s) supplémentaire(s) est/sont utilisé(s) pour déterminer l'amplitude du jet du coude éjecteur.

7. Dispositif selon la revendication 6, caractérisé par le fait que le dispositif de traitement et de commande pour la commande du coude éjecteur, à la base, part d'une largeur déterminée du conteneur.

8. Dispositif selon la revendication 6 ou 7, caractérisé par le fait que la largeur du conteneur à remplir peut être indiquée par un dispositif d'entrée du dispositif de traitement et de commande.

9. Dispositif selon une des revendications 1 à 8, caractérisé par le fait que la valeur de consigne normale du point d'impact de consigne du flux de produit dans le conteneur à remplir déterminée par le dispositif de traitement et de commande peut être modifiée par des signaux entrés manuellement ou des signaux transmis par des capteurs.

10. Dispositif selon une des revendications 1 à 9, caractérisé par le fait qu'un dispositif de transvasement autre, en particulier un tube de vidange d'une moissonneuse-batteuse, la bande transporteuse d'une machine à récolter les pommes de terre ou les betteraves à sucre peut être commandé par le dispositif, à la place du coude éjecteur.

11. Dispositif selon une des revendications 1 à 10, caractérisé par le fait que le ou les télémètres connu(s) est/sont supprimé(s) et que seul le ou les télémètre(s) optique(s) et/ou acoustique(s) supplémentaire(s) mesure(nt) la distance latérale entre la machine de récolte et le conteneur, que le dispositif de traitement et de commande reçoit d'un dispositif connu en soi de mesure de débit des données de débit et les exploite à des fins de commande.
